# DEMANDE DE BREVET EUROPEEN

(11) **EP 3 115 684 A1**
(43) Date de publication de la demande: **11.01.2017**
(21) Numéro de dépôt: 16178918.5
(22) Date de dépôt: 11.07.2016
(51) Int. Cl.: F21V 5/04, F21V 5/08, F21V 17/16, F21V 8/00, F21S 4/28, F21Y 115/10, F21Y 103/00

(54) **DISPOSITIF D'ÉCLAIRAGE LINÉAIRE À LENTILLE LINÉAIRE ET AILES LATÉRALES DE DIFFUSION DE LA LUMIÈRE**

(30) Priorité: 10.07.2015 FR 1556636; 20.08.2015 FR 1557838
(71) Demandeur: Novaday International, 2074 Marin (CH)
(72) Inventeur: FOUROT, Jérome, 38440 Saint-Jean de Bournay (FR)
(74) Mandataire: Jacobacci Coralis Harle

(57) **Abrégé**

L'invention concerne un dispositif d'éclairage linéaire à diodes électroluminescentes comprenant au moins un corps (2) allongé délimitant, en partie au moins, au moins une chambre d'éclairage (11) linéaire allongée dans laquelle est située une source linéaire de lumière ainsi qu'un capot linéaire allongé (20) fermant la chambre d'éclairage (11). Le capot (20) forme, en relation avec la source linéaire, une lentille linéaire (21), au moins translucide, d'axe longitudinal parallèle à l'axe longitudinal (L) du corps (2), avec une face externe d'émission (22) de la lumière et une face interne de réception (23) de la lumière des diodes (5), dont
- la face d'émission (22), vue en section droite transversale, possède une partie centrale de forme convexe bordée par deux parties latérales planes, et
- la face de réception (23), vue en section droite transversale, comprend :
- une région centrale en partie au moins convexe située en regard de la région centrale de la face d'émission pour former un système optique assurant une concentration d'une partie lumière émise par les diodes dans au moins un secteur angulaire d'une valeur comprise entre 20° et 120°,
- deux parties latérales planes sensiblement parallèles aux parties latérales planes de la face d'émission pour former deux ailes (32) latérales de diffusion de la lumière qui bordent la lentille linéaire (21).

## Description

La présente invention concerne le domaine technique de l'éclairage au moyen de sources lumineuses à diodes électroluminescentes en abrégé LED pour en anglais « Light-Emitting Diode ». L'invention se rapporte plus particulièrement aux dispositifs d'éclairage à LED dit linéaires destinés à venir se substituer aux systèmes d'éclairage mettant en oeuvre des tubes fluorescents linéaires à vapeur de mercure ou autre.

Un éclairage à tubes fluorescents tel que, par exemple, utilisé à l'intérieur des bâtiments industriels notamment dans les entrepôts de stockage, dans des halls de production ou supermarchés, met en oeuvre des luminaires fixés en hauteur, et alignés pour éclairer des travées. Chaque luminaire comprend alors un, deux voire trois tubes fluorescents linéaires parallèles. Ces luminaires peu chers permettent effectivement de produire de la lumière mais de permettent pas d'obtenir un éclairage satisfaisant au niveau du sol ou dans un volume compris entre le sol et une hauteur de plusieurs mètres compte tenu de la hauteur à laquelle ils sont généralement situés, de 4 m à une douzaine de mètres et de la façon dont les tubes émettent de la lumière sur toute leur périphérie. De plus, ces luminaires ne permettent pas d'obtenir une consommation d'énergie électrique optimisée et induisent des perturbations des réseaux d'alimentation électrique auxquels ils sont raccordés en raison de leur mode de fonctionnement et des systèmes mis en oeuvre à leur allumage.

Avec le développement des diodes électroluminescentes, les luminaires à tube fluorescents linéaires sont remplacés par des luminaires linéaires à diodes électroluminescentes. Afin d'assurer un éclairage au sol de qualité, lorsque le luminaire est situé à une grande hauteur, il est proposé d'associer chaque diode avec un système optique individuel, dit lentille secondaire qui concentre et focalise la lumière, par exemple dans un cône ayant un angle au sommet d'environ 20° à 30° ou 80 à 90°, de manière à obtenir l'éclairage au sol recherché.

Cependant, la mise en oeuvre des systèmes optiques individuels associés à chaque diode renchéri fortement le coût de fabrication du luminaire ce qui peut être rédhibitoire pour les éclairages en milieu industriel notamment. Par ailleurs, dans certaines configurations de mise en oeuvre il n'est pas toujours besoin d'éclairer le sol juste en dessous et dans l'axe du luminaire mais il peut souhaitable d'éclairer une zone située sur le côté, décalée latéralement par rapport à la zone située à l'aplomb et dans l'axe du luminaire. De plus, l'oeil ayant une capacité de résolution importante même à grande distance, une lentille par diode est visible comme un point lumineux discret et impacte négativement la perception d'éblouissement.

Il est donc apparu le besoin, d'un nouveau type de dispositif d'éclairage linéaire adapté pour assurer un éclairage satisfaisant, notamment à partir d'une grande hauteur dans l'axe du luminaire ou de manière décalée par rapport à cet axe, en offrant un rendu esthétique satisfaisant et limitant l'éblouissement d'un observateur cela tout en présentant un coût de fabrication très nettement inférieur à celui des luminaires comprenant un système optique de concentration de la lumière associé à chaque diode électroluminescente.

Afin d'atteindre cet objectif, l'invention concerne un dispositif d'éclairage linéaire à diodes électroluminescentes comprenant au moins :
- un corps allongé comprenant au moins une surface de réception d'au moins un substrat portant une source linéaire de lumière comprenant au moins une rangée de diodes électroluminescentes ponctuelles ou filaires alignées selon un axe longitudinal du corps et délimitant, en partie au moins, au moins une chambre d'éclairage linéaire allongée dans laquelle les diodes sont situées,
- un capot linéaire allongé fermant la chambre d'éclairage,
   caractérisé en ce que le capot forme, en relation avec la source linéaire, une lentille linéaire, au moins translucide, d'axe longitudinal parallèle à l'axe longitudinal (L) du corps, avec une face externe d'émission de la lumière et une face interne de réception de la lumière des diodes, dont
- la face d'émission, vue en section droite transversale, possède une partie centrale de forme convexe bordée par deux parties latérales planes, et
- la face de réception, vue en section droite transversale, comprend :
   - une région centrale en partie au moins convexe située en regard de la région centrale de la face d'émission pour former un système optique assurant une concentration d'une partie lumière émise par les diodes dans au moins un secteur angulaire d'une valeur comprise entre 20° et 120°,
   - deux parties latérales planes sensiblement parallèles aux parties latérales planes de la face d'émission pour former deux ailes latérales de diffusion de la lumière.

La partie centrale de la lentille linéaire permet d'obtenir une concentration de la lumière susceptible de produire un éclairage conforme aux normes en vigueur notamment pour les éclairages des magasins de stockage, halls de production, supermarchés, circulations et des espaces de bureau dans les bâtiments tertiaires. Par ailleurs, la présence des ailes latérales, qui bordent la lentille linéaire incorporée au capot, permet d'atténuer substantiellement l'éblouissement d'un observateur du dispositif d'éclairage en augmentant la largeur de la de la « source de lumière perçue » ou vue par l'observateur. En effet, les ailes latérales forment des guides de lumière qui récupèrent et diffusent la lumière émise latéralement par les diodes constitutives de la source de lumière au sens de l'invention. Il doit être remarqué que le dispositif d'éclairage selon l'invention peut comporter plusieurs sources de lumière linéaire distantes les unes des autres et comprendre une lentille linéaire en relation avec chaque source de lumière linéaire. Chaque lentille linéaire est alors bordée par deux ailes latérales et deux lentilles linéaires adjacentes sont alors reliées par au moins une aile latérale.

Selon une caractéristique non strictement nécessaire de l'invention, la face externe ou d'émission du capot est symétrique par rapport au plan sagittal.

Selon une caractéristique non strictement nécessaire de l'invention, la face interne ou d'entrée du capot est symétrique par rapport au plan sagittal. Il doit être remarqué que selon l'invention la face externe peut être symétrique par rapport à l'invention tandis que la face interne ne l'est pas et réciproquement. De même, les faces interne et externe peuvent ne pas être symétriques par rapport au plan sagittal, ni l'une ni l'autre.

Selon une caractéristique de la l'invention, les plans des parties latérales planes forment un angle compris entre 40° et 200° et, de préférence, compris entre 90° et 180°

Selon une autre caractéristique de l'invention, les ailes possèdent une épaisseur comprise entre 2 mm et 10 mm.

Selon une caractéristique de l'invention, les ailes comprennent chacune au niveau de leur extrémité médiale une face d'entrée de la lumière qui est plane et borde la région centrale de la face de réception. Une telle configuration de la face d'entrée des guides de lumière formés par les ailes permet de bien récupérer la lumière émise latéralement par les diodes.

Dans le même sens et selon une variante de cette caractéristique, les faces d'entrée sont sensiblement parallèles au plan sagittal.

Toujours dans le même objectif d'optimisation de la récupération de la lumière latérale, les extrémités des faces d'entrée situées à l'opposé de la face d'émission sont situées sensiblement dans un plan définit par le substrat de support des diodes ou au-delà de ce plan en s'éloignant de la face d'émission.

Selon une caractéristique de l'invention, la partie centrale de la face d'émission présente un rayon de courbure supérieur ou égal à 8 mm et de préférence compris entre 13 mm et 30 mm. De telles dimensions permettent d'obtenir un bon compromis entre l'encombrement du dispositif d'éclairage et son efficacité.

Selon une autre caractéristique de l'invention, la région centrale de la face de réception comprend un dioptre central convexe pour former avec la partie centrale correspondante de la face d'émission une lentille biconvexe. Une telle configuration permet de bien concentrer dans la zone d'intérêt.

Selon une variante de cette caractéristique, le dioptre central présente un rayon de courbure compris entre 5 mm et 30 mm.

Selon une autre variante de cette caractéristique, la lentille biconvexe présente une épaisseur mesurée, entre les sommets de ses faces convexes opposées, comprise entre 5 mm et 20 mm.

Selon encore une autre variante de cette caractéristique, le dioptre central de la face de réception est bordé par au moins deux prismes parallèles qui sont situés à l'opposé l'un de l'autre par rapport au dioptre central et qui possèdent chacun une face médiale et une face latérale en partie au moins planes se raccordant au niveau d'un sommet du prisme correspondant. La mise en oeuvre des ces prismes parallèles latéraux permet de mieux récupérer la lumière issue des diodes. Il doit être noté qu'il peut être mis en oeuvre plus d'un prisme de chaque côté du dioptre central.

Dans le cadre de cette variante, les prismes peuvent présenter chacun une hauteur, mesurée entre le sommet du prisme correspondant et la face d'émission, selon une direction normale à la face d'émission, comprise entre 5 mm et 20 mm.

Selon une caractéristique de l'invention, le sommet de la lentille primaire de chaque diode est situé entre un plan tangent au sommet de la partie centrale de la face d'émission et un plan parallèle passant par le ou les points de la face de réception les plus éloignés du sommet de la partie centrale de la face d'émission.

Selon une caractéristique de l'invention, la partie centrale de la face de réception définit une cavité de réception des diodes et/ou des optiques primaires des diodes. Il doit être noté que la cavité de réception peut notamment mais pas nécessairement être aménagée en partie au moins à l'intérieur du dioptre central convexe de la face de réception dans le cas où cette dernière comprend un tel dioptre central convexe.

Selon une autre caractéristique de l'invention, la source linéaire de lumière comprend plusieurs rangées longitudinales de diodes électroluminescentes parallèles.

Bien entendu, les différentes caractéristiques, variantes et formes de réalisation du dispositif d'éclairage selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif d'éclairage selon l'invention.
- La figure 1 est une perspective schématique en vue partiellement éclatée d'un dispositif d'éclairage selon l'invention.
- La figure 2 est une coupe transversale du dispositif d'éclairage assemblé illustré à la figure 1.
- La figure 3 est une coupe transversale du capot formant au moins la lentille linéaire du dispositif d'éclairage illustré aux figures 1 et 2.
- Les figures 4 à 6 sont des coupes transversales schématiques analogues à la figure 2 montrant trois variantes distinctes du dispositif d'éclairage selon l'invention.
- La figure 7 montre en coupe transversale schématique un dispositif d'éclairage conforme à l'invention comprenant plusieurs sources de lumière parallèles distantes les unes des autres.
Il est à noter que sur ces figures les éléments structurels et/ou fonctionnels communs aux différentes variantes peuvent présenter les mêmes références.

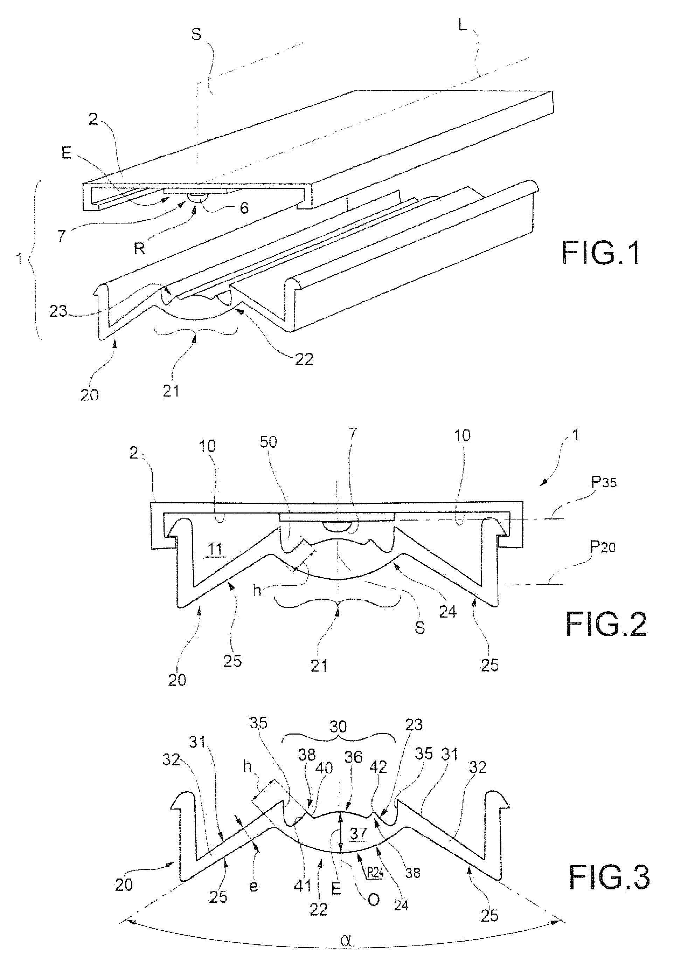

Un dispositif d'éclairage selon l'invention, désigné dans son ensemble par la référence 1 aux figures 1 et 2, peut être qualifié de dispositif d'éclairage linéaire dans la mesure où il présente une source linéaire d'éclairage E comprenant une ou plusieurs rangées R de diodes électroluminescentes ponctuelles et/ou filaires. Un dispositif d'éclairage linéaire selon l'invention présente généralement une longueur très nettement supérieure à la largeur du dispositif d'éclairage sans que l'invention exclue une forme de réalisation du dispositif d'éclairage dans laquelle il présente une largeur très proche de sa longueur par la mise en oeuvre d'une quantité suffisante de rang de diodes électroluminescentes. Le qualificatif linéaire n'en reste pas moins pertinent dans la mesure où il se rapporte à la direction d'alignement des rangées de diodes électroluminescentes.

Le dispositif d'éclairage linéaire 1 comprend un corps allongé 2 qui s'étend selon un axe longitudinal L. Le corps allongé 2 définit au moins une surface 3 de réception d'au moins un substrat 4 portant au moins une rangée R de diodes électroluminescentes 5 alignées selon l'axe longitudinal L. Selon l'exemple illustré, le corps allongé 2 comprend une unique surface de réception 3 qui est sensiblement centrée par rapport au corps allongé 2 et sur laquelle est adapté un unique substrat 4 portant une seule rangée R de diodes 5. Le substrat 4 peut, par exemple, comprendre une carte de circuit imprimé, en abrégé PCB pour en anglais "printed circuit board", sur laquelle les diodes électroluminescentes 5 sont soudées. Bien entendu, le substrat 4 peut être réalisé de toute autre manière appropriée pour assurer la tenue mécanique des diodes électroluminescentes 5 ainsi que leur alimentation électrique.

Selon l'exemple illustré, chaque diode électroluminescente 5 est associée, comme cela ressort plus particulièrement de la figure 2, à une lentille primaire 6 qui possède une face d'émission 7 convexe étant entendu que la face d'émission 7 pourrait également être plane. De plus, dans le cas présent chaque diode électroluminescente 5 est dépourvue de lentille secondaire individuelle. Il doit être noté, selon l'invention les diodes 5 ne comprennent pas nécessairement de lentille primaire.

Selon l'exemple illustré, le corps allongé 2 comprend deux réflecteurs plans 10 situés de part et d'autre de la face de réception 4. Les deux réflecteurs plans 10 s'étendent parallèlement à l'axe longitudinal L et forment, l'un avec l'autre et selon l'exemple illustré, un angle plat ou de 180°.

Le corps allongé 2 délimite avec la surface de réception 3 et les réflecteurs plans 10 une chambre d'éclairage 11 dans laquelle la rangée de diodes électroluminescentes R, constitutive de la source linéaire E, est destinée à se retrouver en partie au moins enfermée.

Le dispositif d'éclairage selon l'invention comprend également un capot linéaire allongé 20 qui ferme en partie au moins la chambre d'éclairage 11. Selon l'invention, le capot 20 est également destiné à laisser passer ou diffuser la lumière émise par chaque source linéaire E. À cet effet, le capot 20 est réalisé dans un matériau au moins translucide et de préférence transparent tel que par exemple une matière plastique comme du polyméthacrylate de méthyle (PMMA), du polytéréphtalate d'éthylène (PET) ou encore du polypropylène (PP) sans que cette liste ne soit ni limitative, ni exhaustive.

Le capot 20 est également adapté pour assurer un conditionnement de la lumière émise par la source linéaire E de manière à la diriger et la concentrer, dans le cas présent, selon un lobe ou secteur d'éclairage symétrique par rapport au plan sagittal S. À cet effet, le capot 20 forme, en relation avec chaque source linaire de lumière E, une lentille linéaire 21 parallèle à l'axe longitudinal L du corps 2. Selon l'exemple illustré figures 1 et 2, le capot 2 comprend une seule lentille linéaire 21.

Selon l'invention, chaque lentille linéaire 21 comprend une face externe 22 d'émission de la lumière qui est selon l'exemple illustré symétrique par rapport à un plan sagittal S sensiblement parallèle à l'axe longitudinal L. Lorsque le capot 20 est adapté sur le corps 2, le plan sagittal S forme un plan de symétrie de la chambre d'éclairage 11, les réflecteurs 10 étant alors l'image l'un de l'autre par rapport au plan sagittal S.

La lentille linéaire 21 possède également une face interne 23 de réception de la lumière des diodes électroluminescentes 5 située à l'opposé de la face externe 22 d'émission de la lumière des diodes électroluminescentes 5. La lentille linéaire 21 assure dans son ensemble une transmission de la lumière émise par lesdites diodes électroluminescentes 5. Dans le cadre de l'invention, la face externe 22 d'émission de la lumière pourrait également être désignée simplement en tant que face avant ou face externe du capot tandis que la face de réception 23 pourrait être qualifiée simplement de face arrière ou face interne.

Comme cela ressort de la figure 3, la face externe 22 possède, en section droite transversale, une partie centrale 24 de forme convexe, de préférence lisse, bordée par deux parties latérales planes 25 également de préférence lisses. La partie centrale 24 convexe possède un rayon de courbure R24 supérieur ou égal à 8 mm et de préférence compris entre 13 mm et 30 mm. De manière préférée, la partie centrale 24 de la face externe 22 possède la forme, en section droite transversale, d'un arc de cercle.

Les plans des parties latérales planes 25 forment un angle α compris entre 40° et 200° et, de préférence, compris entre 90° et 180°. Selon l'exemple illustré, les parties planes 25 forment un angle α de l'ordre de 115°

La face de réception 23 est, quant à elle, conformée de manière à comprendre une région centrale 30 en partie au moins convexe située en regard de la région centrale 24 de la face externe 22 pour former, selon l'exemple illustré, un système optique assurant une concentration d'une partie lumière émise par les diodes dans un secteur angulaire symétrique par rapport au plan sagittal S d'une valeur comprise entre 20° et 120°. Les parties centrales des faces de réception et d'émission définissent ensemble la lentille linéaire 21. La face de réception comprend également deux parties latérales planes 31 sensiblement parallèles aux parties latérales planes 25 de la face d'émission 23 pour former deux ailes latérales 32 de diffusion de la lumière. Les ailes latérales 32 forment deux guides de lumière qui possède une épaisseur e comprise entre 2 mm et 10 mm.

Afin de bien réfléchir la lumière en direction des faces 25 les faces latérales planes 31 de la face de réception 23 peuvent être associées à des réflecteurs, recevoir un revêtement réfléchissant ou encore comprendre une texturation ou des micro-primes ou micro-conformation induisant une réflexion de la lumière.

Selon l'exemple, illustré les ailes 32 comprennent chacune au niveau de leur extrémité médiale une face 35 d'entrée de la lumière qui est plane et borde la région centrale 30 de la face de réception. Selon l'exemple illustré, les faces d'entrée 35 sont sensiblement parallèles au plan sagittal S.

Dans le cas présent, la région centrale 30 de la face de réception comprend un dioptre central 36 convexe pour former avec la partie centrale correspondante de la face d'émission une lentille biconvexe 37. Le dioptre central 36 présente alors de préférence un rayon de courbure compris entre 5 mm et 30 mm. De plus, la lentille biconvexe présente de manière préférée une épaisseur E, mesurée entre les sommets de ses faces convexes opposées 24, 36 , comprise entre 5 mm et 20 mm.

Toujours, selon l'exemple illustré, le dioptre central 36 de la face de réception 23 est bordé par au moins deux prismes parallèles 38 qui sont situés à l'opposé l'un de l'autre par rapport au dioptre central.

Chaque prisme 38 comprend une face médiale 40, en partie au moins plane, située du côté du plan sagittal S et une face latérale 41, en partie au moins plane, située à l'opposé du plan sagittal par rapport à la face médiale 40. Les faces médiale et latérale de chaque prisme sont sensiblement parallèles à l'axe longitudinal L. Les faces médiales 40 et latérale 41 d'un même prisme se rejoignent pour former le sommet 42 du prisme correspondant.

De manière préférée mais non strictement nécessaire, les parties planes des faces latérales 41 et médiale 40 d'un même prisme latéral forment un angle compris entre 15° et 60°. De plus, la partie plane de la face médiale 40 de chaque prisme forme avec le plan sagittal S un angle compris entre 0° et 45° en valeur absolue. De même, la partie plane de la face latérale de chaque prisme forme avec le plan sagittal S un angle compris entre 5° et 80° en valeur absolue

Par ailleurs, selon l'exemple illustré et afin que la lentille linéaire 21 collecte un maximum de la lumière émise par la source linéaire E pour la concentrer dans la direction privilégiée D, les prismes présentent chacun une hauteur h, mesurée entre le sommet du prisme correspondant et la face d'émission, selon une direction normale à la face d'émission, comprise entre 5 mm et 20 mm.

Dans le cas présent, le sommet de la face d'émission 7 de la lentille primaire de chaque diode électroluminescente 5 est également situé entre un plan P20 tangent au sommet la partie centrale 24 de la face d'émission et un plan P35 parallèle passant par le ou les points de la face de réception les plus éloignés du sommet de la partie centrale de la face d'émission.

Il pourra être noté que dans la configuration représentée la partie centrale de la face de réception 23 définit une cavité 50 de réception des diodes formant la source lumineuse.

Un dispositif d'éclairage linéaire, selon l'invention et tel qu'ainsi réalisé, permet de rediriger une grande partie de la lumière émise par les diodes dans la direction privilégiée parallèle au plan sagittal S. En effet, la lentille médiale biconvexe linéaire 37 collimate la lumière issue des diodes 5 dans la direction privilégiée selon un cône étroit centré sur son axe optique O tandis que les prismes linéaires permettent, après réflexion totale interne à la lentille linéaire 21, de rediriger la lumière dans la direction privilégiée. De plus, les ailes latérales 32 assurent un recyclage de la lumière éventuellement réfléchie par la face de réception 23 et de la lumière issue des diodes électroluminescentes 5 qui n'aurait pas directement atteint la face de réception 23.

Le dispositif d'éclairage décrit précédemment en relation avec les figures 1 à 3, comprend une source linéaire de lumière E formée d'une seule rangée R de diodes électroluminescentes. Toutefois, selon l'invention, la source linéaire de lumière E pourrait comprendre plusieurs rangées de diodes électroluminescentes ponctuelles ou filaires R juxtaposées.

Bien entendu, différentes autres variantes du dispositif d'éclairage selon l'invention peuvent être envisagées dans le cadre des revendications annexées.

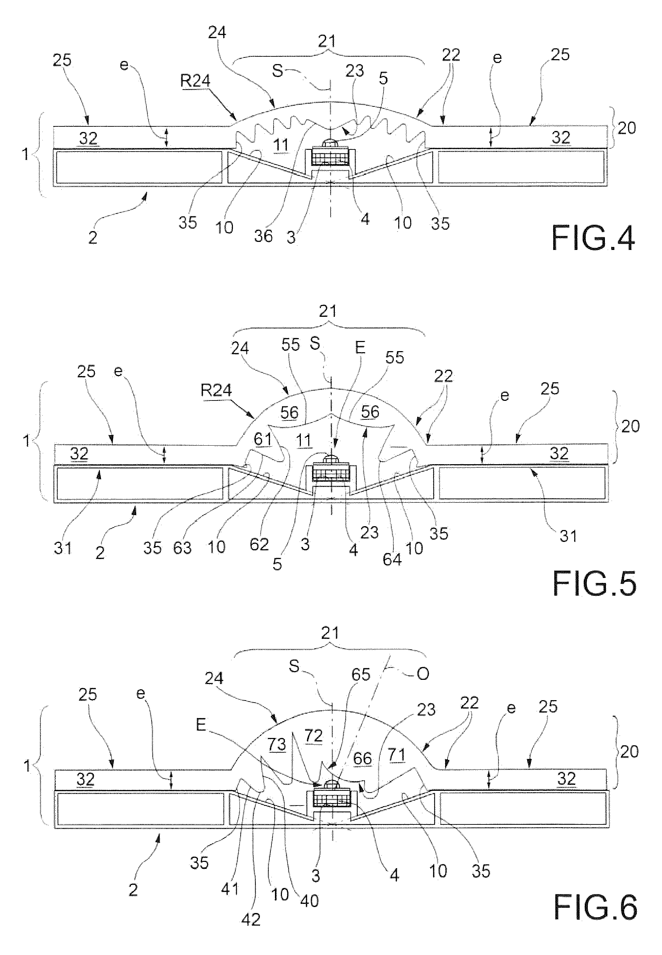

Ainsi, la figure 4 illustre une variante du dispositif d'éclairage conforme à l'invention dans laquelle les faces 25 des ailes 32 forment un angle plat de 180°. De plus, selon cette variante, le dioptre central 36 convexe de la face interne 23 du capot est bordé de chaque coté par quatre prismes. La lentille linéaire 21 ainsi formée est ici symétrique par rapport au plan sagittal S. Selon la variante de la figure 4, les deux réflecteurs plan 10 du corps 2 forment un angle obtus par exemple compris entre 100° et 170.

La figure 5 illustre une autre variante du dispositif d'éclairage conforme à l'invention qui diffère, de la variante illustrée à la figure 4, en ce que la partie centrale de la face interne 23 comprend deux dioptres médiaux 55 convexes adjacents qui sont situés de part et d'autre du plan sagittal S et définissent chacun avec la face externe 22 une lentille médiale 56 biconvexe. La partie centrale de la face interne comprend également au moins deux prismes latéraux parallèles 61 qui sont situés à l'opposé l'un de l'autre par rapport aux dioptres médiaux 55 en étant chacun adjacent à un dioptre médial 55 et qui possède chacun une face médiale 62 et une face latérale 63 en partie au moins planes se raccordant au niveau d'un sommet du prisme 64 correspondant.

Selon cette variante, les prismes 61 présentent chacun une hauteur, mesurée entre le sommet du prime correspondant et la face externe 22, supérieure à l'épaisseur de chaque lentille médiale 56 mesurée entre le sommet du dioptre médial 55 correspondant et la face externe 22.

La variante de la figure 5 permet d'obtenir pour chaque source linéaire de lumière électroluminescente deux secteur d'éclairages présentant chacun dans un plan transversal à l'axe d'alignement des diodes un angle au sommet aigu et, par exemple, compris entre 10° et 30° et dont l'axe ou bissectrice forme un angle aigu avec le plan sagittal S.

La figure 6 illustre une autre variante du dispositif d'éclairage conforme à l'invention qui diffère, de la variante illustrée à la figure 4, en ce que la partie centrale de la face de réception 23, vue en section droite transversale, comprend un dioptre médial 65 convexe décalé qui définit avec la face externe une lentille médiale biconvexe 66 dont l'axe optique O est décalé latéralement par rapport au plan sagittal S.

La partie centrale de la face de réception 23, vue en section droite transversale, comprend également d'un coté du dioptre médial 65 un premier prisme latéral 71 qui est adjacent au dioptre médial 65.

La partie centrale de la face de réception 23, vue en section droite transversale, comprend de l'autre coté du dioptre médial 65 une série de prismes parallèles au premier prisme 71 qui comprend au moins un deuxième prisme 72 latéral et un troisième prisme 73 latéral, le deuxième prisme 72 latéral étant adjacent au dioptre médial 65 et au troisième prisme 73 latéral.

Chaque prisme latéral possède une face médiale 40 et une face latérale 41 en partie au moins planes se raccordant au niveau d'un sommet 42 du prisme correspondant. Les prismes latéraux présentent alors chacun une hauteur, mesurée entre le sommet du prisme correspondant et la face externe, la hauteur du deuxième prisme latéral 72 étant supérieure ou égale à l'épaisseur de la lentille médiale 66 mesurée entre le sommet du dioptre médial 65 et la face externe.

Selon cette variante la partie centrale de la face interne 23 n'est pas symétrique par rapport au plan sagittal S. Cette variante permet d'obtenir un lobe d'éclairage latéral décalé par rapport au plan sagittal S de symétrie de la face externe du capot. En effet, la lentille médiale travaille de manière à collimater la lumière dans un secteur angulaire étroit centré sur l'axe optique de la lentille qui forme un angle aigu avec le plan sagittal.

Par ailleurs, les prismes latéraux travaillent en réflexion totale interne de manière à réfléchir la lumière dans la même direction que la lentille médiale tandis que les ailes latérales 35 diffuse la lumière qui n'a pas était transmise par la lentille linéaire 21.

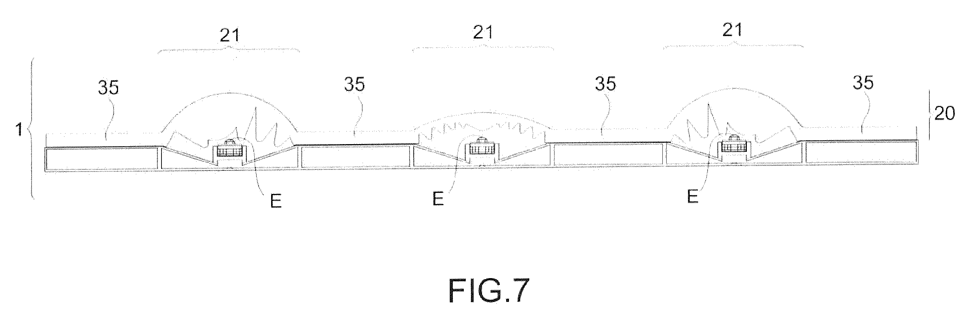

La figure 7 montre une variante d'un dispositif d'éclairage selon l'invention comprenant plusieurs sources linéaires de lumière E parallèles et distantes les unes des autres. Le capot comprend ou intègre alors une lentille linéaire 21 en relation avec chaque source de lumière E Chaque lentille linéaire 21 est alors bordée par deux ailes latérales 35 qui sont intégrées au capot 20 et qui la relient le cas échéant à une lentille linéaire 21 adjacente.

Par ailleurs, il doit être compris que selon l'invention plusieurs dispositifs d'éclairage linéaire peuvent être associés selon diverses combinaisons pour former un luminaire.

## Revendications

1. Dispositif d'éclairage linéaire à diodes électroluminescentes comprenant au moins :
- un corps (2) allongé comprenant au moins une surface de réception (3) d'au moins un substrat (4) portant une source linéaire (E) de lumière comprenant au moins une rangée (R) de diodes électroluminescentes (5) alignées selon un axe longitudinal (L) du corps et délimitant, en partie au moins, au moins une chambre d'éclairage (11) linéaire allongée dans laquelle les diodes (5) sont situées,
- un capot linéaire allongé (20) fermant la chambre d'éclairage (11),
**caractérisé en ce que** le capot (20) forme, en relation avec la source linéaire, une lentille linéaire (21), au moins translucide, d'axe longitudinal parallèle à l'axe longitudinal (L) du corps (2), avec une face externe d'émission (22) de la lumière et une face interne de réception (23) de la lumière des diodes (5), dont
- la face d'émission (22), vue en section droite transversale, possède une partie centrale de forme convexe bordée par deux parties latérales planes, et
- la face de réception (23), vue en section droite transversale, comprend :
- une région centrale en partie au moins convexe située en regard de la région centrale de la face d'émission pour former un système optique assurant une concentration d'une partie lumière émise par les diodes dans au moins un secteur angulaire d'une valeur comprise entre 20° et 120°,
- deux parties latérales planes sensiblement parallèles aux parties latérales planes de la face d'émission pour former deux ailes (32) latérales de diffusion de la lumière qui bordent la lentille linéaire (21).

2. Dispositif d'éclairage linéaire selon la revendication précédente, **caractérisé en ce que** les plans des parties latérales planes (25, 31) du capot forment un angle compris entre 40° et 200° et, de préférence, compris entre 90° et 180°.

3. Dispositif d'éclairage linéaire selon l'une des revendications précédentes, **caractérisé en ce que** les ailes (32) possèdent une épaisseur comprise entre 2 mm et 10 mm.

4. Dispositif d'éclairage linéaire selon l'une des revendications précédentes, **caractérisé en ce que** les ailes (32) comprennent chacune au niveau de leur extrémité médiale une face (35) d'entrée de la lumière qui est plane et borde la région centrale (30) de la face de réception.

5. Dispositif d'éclairage selon la revendication précédente **caractérisé en ce que** les faces d'entrée (35) sont sensiblement parallèles au plan sagittal (S).

6. Dispositif d'éclairage selon la revendication 4 ou 5, **caractérisé en ce que** les extrémités des faces d'entrée (35) situées à l'opposé de la face d'émission (22) sont situées sensiblement dans un plan définit par le substrat (4) de support des diodes ou au-delà de ce plan en s'éloignant de la face d'émission (22).

7. Dispositif d'éclairage selon l'une des revendications précédentes, **caractérisé en ce que** la partie centrale (24) de la face d'émission (22) présente un rayon de courbure supérieur ou égal à 8 mm et de préférence compris entre 13 mm et 30 mm.

8. Dispositif d'éclairage selon l'une des revendications précédentes, **caractérisé en ce que** la région centrale (30) de la face de réception comprend un dioptre central convexe (36) pour former avec la partie centrale (24) correspondante de la face d'émission (22) une lentille biconvexe (37).

9. Dispositif d'éclairage selon la revendication précédente **caractérisé en ce que** le dioptre central (36) présente un rayon de courbure compris entre 5 mm et 30 mm.

10. Dispositif d'éclairage selon la revendication 8 ou 9, **caractérisé en ce que** la lentille biconvexe (37) présente une épaisseur, mesurée entre les sommets de ses faces convexes opposées, comprise entre 5 mm et 20 mm.

11. Dispositif d'éclairage selon l'une des revendications 8 à 10 **caractérisé en ce que en ce que** le dioptre central (36) de la face de réception est bordé par au moins deux prismes parallèles (38) qui sont situés à l'opposé l'un de l'autre par rapport au dioptre central (36) et qui possèdent chacun une face médiale (40) et une face latérale (41) en partie au moins planes se raccordant au niveau d'un sommet (42) du prisme correspondant.

12. Dispositif d'éclairage selon la revendication précédente **caractérisé en ce que** les prismes (38) présentent chacun une hauteur, mesurée entre le sommet (42) du prisme correspondant et la face d'émission (22), selon une direction normale à la face d'émission, comprise entre 5 mm et 20 mm.

13. Dispositif d'éclairage linéaire selon l'une des revendications précédentes, **caractérisé en ce que** le sommet de la lentille primaire (6) de chaque diode (5) est situé entre un plan (P20) tangent au sommet da la partie centrale (24) de la face d'émission (22) et un plan (P35) parallèle passant par le ou les points de la face de réception (23) les plus éloignés du sommet de la partie centrale (24) de la face d'émission (22).

14. Dispositif d'éclairage linéaire selon l'une des revendications précédentes, **caractérisé en ce que** la partie centrale (30) de la face de réception définit une cavité (50) de réception des diodes et/ou des optiques primaires des diodes.

15. Dispositif d'éclairage linéaire selon l'une des revendications précédentes, **caractérisé en ce que** la source linéaire de lumière (E) comprend plusieurs rangées (R) longitudinales de diodes électroluminescentes parallèles.
